# EUROPEAN PATENT APPLICATION

(11) **EP 1 845 067 A1**
(43) Date of publication of application: **17.10.2007**
(21) Application number: 05811643.5
(22) Date of filing: 02.12.2005
(51) Int. Cl.: C03B 17/06

(54) **PROCESS FOR PRODUCING PLATE GLASS**

(30) Priority: 16.12.2004 JP 2004364019; 17.12.2004 JP 2004365165
(71) Applicant: National Institute of Advanced Industrial Science and Technology, Tokyo 100-8921 (JP)
(72) Inventor: Kojima, Gen Nat. Inst. of Adv. Industrial Science&, Tsukuba-shi, Ibaraki 3058565 (JP)
(74) Representative: Hoarton, Lloyd Douglas Charles
(86) International application number: PCT/JP2005/022167
(87) International publication number: WO 2006/064674

(57) **Abstract**

Proposed is a manufacturing method to continuously fabricate plate glass which comprises supporting at least bottom surface of the traveling glass before stiffening by means of a gas generated from support members and controlling the gravitational effect on the glass to provide the partial displacement and deformation repeatedly while changing the position thereof so as to achieve propagation of overall glass extension.
The proposed technology shows the possible way to solve or improve the drawbacks and restrictions of known technologies and provides convenient process which may significantly save energy and resource consumption alleviating environmental problems. The technology also realizes plate glass product of high-quality without surface defects and further makes clear the important technical perspectives and essential elements which the former technologies using water vapor thin film basically lack. As a consequence, the invention proposes a novel technology which provides high-quality plate glass having superior microscopic smoothness as well as macroscopic thickness uniformity and surface flatness through realizing the plate glass fabrication method which utilizes broader variety of gasses.

## Description

### TECHNICAL FIELD

The present invention relates to a manufacturing method of high-quality plate glass having a high level of surface smoothness and flatness with minimal surface detects.

### BACKGROUND ART

In advanced countries, plate glass for use in construction and vehicle is mostly produced by tin-bath method which comprises flowing molten glass onto tin bath and following gradual fabrication of flat sheet.

In the case of manufacture of thin plate glass to meet some application demands, where such high quality and flatness is required as any contamination of tin in the glass surface is not allowed, so-called fusion down draw method, which comprises overflowing molten glass from both sides of specific platinum conduit followed by flowing down of glass along the surfaces of a platinum guide to make the glass flows combined into one sheet, is used.

Further, in the case of manufacturing wired sheet glass or the like, the , molten glass is pressed with a metal roller and molded into a laminate in order to sandwich stainless wire.

In the case of the manufacture of a plate glass with the tin-float process, since fabrication is performed in a high-temperature tin bath, it is necessary to maintain a reducing atmosphere of hydrogen or the like in a closed room to prevent the oxidization of tin, and this causes problems of cost and safety measures concerning the hydrogen and the like.

Further, surface defects of products caused by the intrusion of tin into the glass resulting from the contact of glass with tin and the tin oxide resulted from the reaction of tin and oxygen which infiltrates into the tin bath room become particularly problematic in the applications for displays which demands the high quality. Moreover, significant energy cost will arise for maintaining tin at high temperatures, especially in small-scale production, and influence on environmental issues such as carbon dioxide emission cannot be ignored.

Further, in the case of the tin-float process, since high-temperature glass comes in direct contact with metallic tin with high heat conductivity leading to the large heat flux between the glass and metallic tin, the glass is directly much affected by the temperature of tin, and accordingly the temperature control of tin becomes an extremely important technical issue.

Further, in the fabrication conducted under such contact heat transfer, the spot where a local excess deformation of glass takes place will be retained isothermally with the surroundings through the heat supply from tin and consequently the spot has the much fear to suffer even more abnormal deformation. In order to avoid this kind of problem, it is necessary to achieve leveling and uniformity by utilizing the viscous flow of glass and to fabricate slowly and with quasi-equilibrium while achieving sophisticated temperature adjustment.

Further, there is the so-called fusion down draw process which comprises overflowing molten glass from both sides of specific conduit followed by flowing down of glass along the both surfaces of a platinum guide to make the glass flows combined into one sheet of glass ribbon at the bottom end of the guide, and then applying the down draw fabrication. With this process, since the surface of the plate glass product only contacts air during the manufacturing process, there is no fear of the foregoing surface defects, and this process is appreciated in the manufacture of high-end products such as the one for displays.

But, since glass is fabricated by means of a method of drawing the glass down vertically, the maximum load hangs on the glass at the bottom tip of the platinum guide as with other down draw processes, and the temperature control of glass for alleviating such situation becomes complicated and thus the process is not suitable for thick products. Moreover, since it is necessary to change the platinum conduit at each time of changing the grades of different width or thickness of the product, the so-called job change will become troublesome, and the cost of expensive platinum lips shall not be ignored.

Further, in the case of roll molding using a metal roller, it is difficult to avoid the trace of the contact with the metal roller from remaining as wrinkles or ruggedness, and the quality of the products shall not be allowed to be used as flat plate glass as produced.

Recently, method for continuous manufacturing of flat glass different from the above mentioned ones was proposed. The method comprises flowing molten glass onto a porous substrate which contains water. It claims to provide the obtained flat glass with clean surface with least defects (refer to Patent Document 1).,

An improved version of the method proposes drawing the glass ribbon under such conditions that the cooling rate should be larger than 100°C per minute, preferably 200°C or larger per minute in the maximum temperature range of between 1300°C and 700°C, which is the standard temperature range where glass is fabricated, during fabrication with adequate tensile stress parallel to the glass surface to attain appropriate thickness successfully (refer to Patent Document 2).

The tensile stress may include bi-axes of directions along and across the glass ribbon stream (refer to Patent Document 3).

Nevertheless, since all these method and ideas shown above lack the principle concerning how to transfer the high temperature glass melt, they could not provide the product with enough flat surface and uniform thickness over entire width.

Another subject is the supply of glass melt from furnace to fabrication zone. Conventional way of supply is to control the glass flow rate via a gate and serve the melt through a spout lip. Some ideas on the structure (refer to Patent Document 4) and material (refer to Patent Document 5, Patent Document 6, Patent Document 7) of the spout lip are proposed to improve the productivity, etc.

These ideas are concerned with partial improvement of the tin-bath process, and do not afford any solutions concerning the melt supply for fusion down draw process nor for any other methods including the water vapor thin film method.
[Patent Document 1] Japanese Patent Laid-Open Publication No. H9-295819
[Patent Document 2] Japanese Patent Laid-Open Publication No. 2002-47017
[Patent Document 3] Japanese Patent Laid-Open Publication No. 2001-247320
[Patent Document 4] Japanese Patent Laid-Open Publication No. H7-33456
[Patent Document 5] Japanese Patent Laid-Open Publication No. 2003-146675
[Patent Document 6] Japanese Patent Laid-Open Publication No. H6-345467
[Patent Document 7] Japanese Patent Laid-Open Publication No. 2003-300739

### DESCRIPTION OF THE INVENTION

The object of the present invention is to provide a new technology for plate glass manufacture which saves energy and resources alleviating related environmental problems as well as to afford a technology to produce high quality plate glass having defect-free surface, leading to solution or improvement of the conventional tin bath method and down draw method represented by fusion process and metal-rolling method, etc. The invention also aims to propose a new technology for plate glass fabrication which uses versatile species of gases to achieve high-quality flat glass product having macroscopic flat surface and uniform thickness as well as microscopic smoothness by nanometer range by making clear the technological aspects and constituents in the technology using water vapor film which the existing ideas theoretically and basically lack.

Based on the recognition of the above mentioned issues and subjects, the inventor, after extensive investigations, got the important information that we should at least support the bottom surface of continuously moving glass before stiffening with a gas generating from the support members, preferably maintaining both surfaces of high temperature glass having suitable viscosity for fabrication in gaseous atmosphere, and that we should make repeated partial (or local) displacement and deformation of glass, varying the spot, through controlling and propagating the gravity effect onto the entire area of glass, to extend the glass fully.

The term "displacement" as used herein means the glass being raised, lowered or flown leading to change of the instantaneous position of glass.

The control of the gravitational effect on the glass herein can be expressed as "dynamic gravity control". The inventor found that the fabrication by means of both the dynamic gravity control and the tensile stress is very important to settle the task.

The dynamic gravity control is to induce the partial displacement and deformation through gravity covering the entire area of the high-temperature glass to be fabricated, and to control them through varying the magnitude and location, etc. of the gravity effect. The idea comes from the information that it is important to vary the gravity effect working a spot at every moment under a certain order, or in other words to give the glass displacement and deformation which are varied in the course of place and time by the control of gravity effect.

Owing to this dynamic gravity control, it becomes possible for us to bring about a uniform expansion (extension) covering the entire glass to be fabricated and to realize the uniform thickness and improved flatness.

The dynamic gravity control is observed to be particularly important when we fabricate a broad plate glass and treat glass melt of high temperature where the glass melt is known to behave as so-called Newtonian fluid. Solely such dynamic gravity control as described above can first enable to supply the insufficient transmission of tensile stress exerted on the glass of high temperature and low viscosity at both side ends of ribbon.

Further, in order to realize a high-level of uniformity and smoothness/flatness, it is also necessary and important, in addition to the dynamic gravity control, to continuously apply tensile stress to the glass down to the temperature where the viscosity and rigidity of the glass to be fabricated are sufficiently high and glass deformation will no more occur. The term "continuous" as used herein shall mean that there is no marked temporal nor local discontinuance or severance. For example, even in a case of applying partial tensile stress to the glass with pins embedded in a device at a certain interval of 5mm, the situation shall be deemed as continuous as long as such application is conducted all the time in the present manufacturing process.

As a way to realize this kind of dynamic gravity control, using a plurality of gas generating parts (hereinafter referred to as the "dynamic gravity control parts") arrayed at a space installed on the glass supporting base is effective. Namely, composing the glass support member from support base and dynamic gravity control parts is effective.

The way does not merely mean to float or support the glass with interposed gas, the important point of the way is to realize local displacement and deformation induced by gravity using the dynamic gravity control parts which generate gas. Therefore, the size, shape, disposition, etc. of the dynamic gravity control parts need to be designed according to the kind, shape, usage, etc. of the manufacturing glass material so that the glass will be provided with the optimum local gravitational displacement and deformation. Consequently, these constituents shall be suitably changed as shown later in the drawings and should not be understood to be of fixed size and shape.

These dynamic gravity control parts are particularly preferable to be arranged perpendicular or at a given angle to the traveling direction of the glass ribbon, whereby these gas generating parts are able to locally supply adequate displacement and deformation of the glass through gravity. Moreover, a configuration, where the height of the gas generating parts is adjustable, is effective. Thereby, the gravity effect on the glass, resultant displacement and deformation can be optionally adjusted.

Generally, the height of the dynamic gravity control parts is preferably set to be between 1mm and 50mm above the supporting base. The preferable range is further optimized based on various factors and conditions such as thickness of the glass and angle of the support parts to the horizontal plane, etc. When the height is below the range, sufficient gravitational effect is difficult to be expected, and, on the other hand, when the height is over the range, the influence of gravity will work excessively and the gas generation near the apex of the parts will be obstructed.

Another possible and effective configuration is to set the dynamic gravity control parts at a certain space and at a given angle to the flow direction of the glass ribbon with symmetry or asymmetry from the center thereof.

Running the ribs of dynamic gravity control parts faster than the glass ribbon in the same direction realizes the successive move of gravity effect to accomplish the extension and uniformity of glass. Running of the parts in the reverse direction to that of glass is also possible and useful.

The dynamic gravity control parts may move independently from the support base without combination or may move in accordance or in combination with the support base, and the mode can be suitably selected according to the kind of glass to be fabricated, shape of the manufactured product, fabricating condition, etc. As described above, such structure providing the variable heights of the dynamic gravity control parts from the support base may also be adopted.

As observed herein, the support members as a whole can either be fixed still, travel with different speed in the same direction or travel in a different direction, with respect to the traveling glass.

Normally, the viscosity of glass suitable for fabrication is 10⁷ poise or less and the rigidity modulus of the transformable glass is 50GPa or less. The continuous application of tensile stress in the directions along and across the glass traveling direction in a temperature range corresponding to the above described viscosity or rigidity is also very effective to achieve the enhanced surface flatness and thickness uniformity.

In particular, the continuous application of the tensile stress along and across the flow direction of glass ribbon is important, where the tensile stress should work on the glass continuously in terms of place and time.

When the above described conditions are not satisfied, we may have the fear that thickness non-uniformity and wrinkles of the glass products will be caused by the discontinuity and unevenness of the tensile stress. Furthermore, so much as in the region where the viscosity and rigidity of the glass exceeds the suitable range for fabrication, there remains such fear of bending and/or shrinkage deformation that the role of the tensile stress to be applied to the overall glass ribbon in the region is none the less important.

In response to this subject, the design, specification, magnitude of stress and operating conditions of the devices suitable to meet the viscosity and rigidity of the glass are also important in addition to the position of applying the tensile stress.

It is desirable that such devices are set appropriately in accordance with the viscosities and rigidities of the flowing glass ribbon covering from the upstream to the downstream.

Further, when applying tensile stress to the direction across the flowing glass ribbon, the optimization of the size and shape of the devices, direction of stress to exert, etc. based upon the consideration of the above mentioned factors is importantly needed, since the glass is constantly moving in the downstream direction. Still the more, the stress component ratio between the two directions of across and along the glass flow should be desirably of small difference.

Further, the present invention also includes the process of flowing molten glass onto the support member inclined downward in the flow direction of the glass. Upon supporting at least the bottom surface of continuously moving glass of low viscosity with gas generated from a support base, a plurality of gas generating dynamic gravity control parts of a given size and shape are arranged on the support base, and through the control of the gravity effect on the glass, the local displacement and deformation of glass are repeated and shifted to propagate to the whole area rendering the glass extended. In this way, it becomes possible to minimize the temperature and thickness distributions of the glass to be supplied on to the support member.

As a result of transferring the glass melt to the fabrication zone through such process, high-quality plate glass can be fabricated.

In regard to such process, not only the so-called spout lip but also a variety of lips and guides which may transfer &/or guide the molten glass material to a given place or direction such as fabrication zone will be exemplified to be the pretreatment process necessary for the fabrication of plate glass.

In these processes, to set a pair of dams made of gas generating materials at both sides of the lip is effective in retaining the glass ribbon within a given width, or in guiding the glass flow in a given direction.

Based on the structural design of such gas-support pretreatment system to enable the dynamic gravity control, uniformity of the thickness and temperature of the glass ribbon to be supplied to the fabrication zone is realized, leading in turn to the realization of a high-quality plate glass.

Further, the inclination angle on which the molten glass flows also plays an important role in relation to dynamic gravity control, and, as a consequence, consideration on the structure design is necessary so that gravitational effect on the molten glass and other factors such as the pressure and flow of gas will appropriately work together.

The cross section of the supply port of the molten glass in the pretreatment process such as the lip may be either round, oval or rectangular, and also the mode of the molten glass supply from the crucible or furnace can be either extruded from the bottom or overflowed from the top or side.

As described above, the important matter of the present glass fabrication is that the glass to be fabricated should be surrounded by gas atmosphere, and the gas to be used may be any one so as long as it does not substantially damage or affect the glass under the fabrication conditions. In terms of availability, operability and safety, however, the use of air or water vapor is usually recommended.
When water is used as raw material for generating vapor, as water is evaporated from the surface of the support base and the dynamic gravity control parts by the heat of the high-temperature glass, the purity of water is required to be highest in order to avoid or alleviate the near-surface accumulation and deposition of trace amounts of inorganic substances and inorganic ions contained in the water. Consequently, the content of the above mentioned inorganic species should be as low as possible.

The material of the support members generating any type of gas is desirable to comprise continuous porous or fibrous structure so as to have necessary and sufficient vacancy and to suffer little dimensional change from swelling or the like which may be caused by the passage or occlusion of gas or gas generating liquid.

From these perspectives, metal, ceramics, carbon, heat-resistant resin, etc are preferably used.

Further, the existence of grooves or pores for the smooth discharging of gas is important and indispensable in order to control the gas pressure which supports the glass not to exceed or locally exceed. It is important to provide the support base and the dynamic gravity control parts with grooves or pores of appropriate size and distribution.

Further, when the glass is fabricated by use of this kind of technology, the glass ribbon to be supported with gas may be horizontal or inclined at a given angle from the horizontal so long as not vertical. Moreover, the movement of the gas spouting generating members may move in the same direction with or in the opposite direction to the glass ribbon. Also, when the glass ribbon is fabricated while moving fast enough, the support members may be immobile, fixed bed. The important is that there should be realized sufficient relative difference of the velocity of the support members from that of the glass ribbon.

By means of the present invention described above, an inexpensive and convenient manufacture, which affords high-quality plate glass without any surface defects or stains, having superior smoothness showing a nano-level surface smoothness and flatness of the overall product, and substantially containing no tin or the like, becomes available. In particular, the invention realizes the minimization of the thickness distribution across the entire width of plate glass product and solution of the defects such as wrinkles and warps which were difficult to achieve with the known vapor film methods, and enables the general manufacturing of the so-called high-end products for display, etc. covering versatile sizes and materials.

Further, since the present invention is able to overcome the defects, non-uniformity of glass flow, stagnation of glass flow in the vicinity of side wall and non-uniformity of the temperature deriving from pre-process, high-quality plate glass can be manufactured with superior productivity through the consistent process from the due pre-process of fabrication.

As easily presumed from the fact that the process of the present invention uses the gas such as air and water vapor to treat the glass and as the support medium, the method needs not to use the precious resources such as the tin and hydrogen, while the existing processes do.

In addition, the present invention affords such fruits that the process does not require any extra-thermal-energy besides the heat of molten glass, is open system with convenient and small scale apparatus accompanied with reduced equipment investment, and provides clean operational environment without any substantial emission of carbon dioxide or other gasses. The invention may lead to a general process coping with easy and prompt change of grades, saving glass material and a broad spectrum of productions covering from small-volume/multi-grades production to mass production. Thus, the present invention provides a manufacturing process of plate glass which achieves remarkable energy and resource conservations and is indispensable for the sustainable development.

### BRIEF DESCRIPTION OF THE DRAWINGS

Fig. 1 is a side cross-section figure of the fabrication process of plate glass using a gas support member based on dynamic gravity control;
Fig. 2 is a pre-process front figure using the gas support members based on dynamic gravity control;
Fig. 3 is a partial plane figure of fabrication process using the gas support members based on dynamic gravity control; and
Fig. 4 is a partial bird's eye view of fabrication process using the gas support members based on dynamic gravity control.

### BEST MODE FOR CARRYING OUT THE INVENTION

The following refers to a soda lime silicate glass having a composition generally used for construction application as a typical example to explain the embodiments of the present invention.

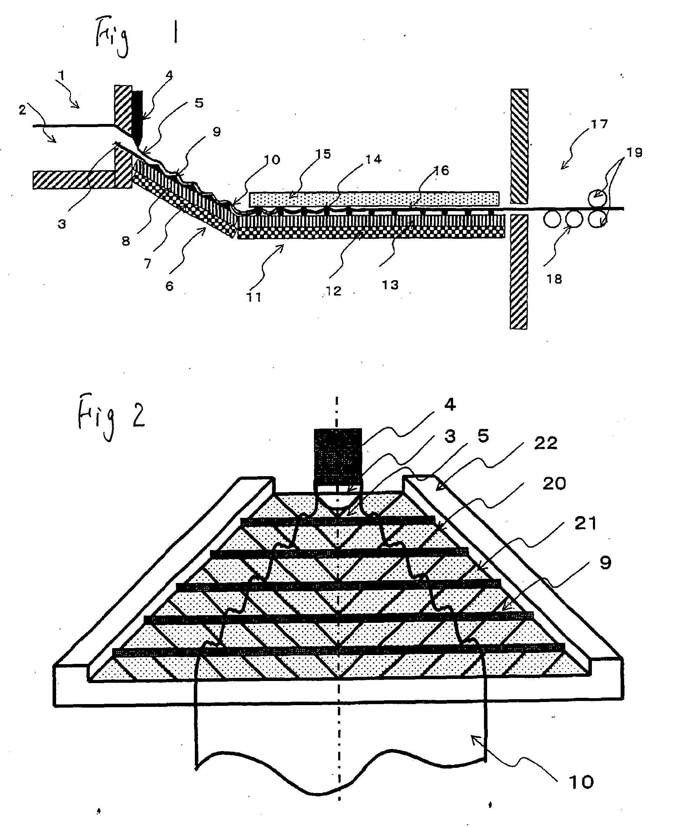

Soda lime silicate glass containing silica (70wt%), aluminum oxide (2wt%), sodium oxide (13wt%), calcium oxide (10wt%), magnesium oxide (4wt%) and other trace components such as iron oxide is melted at a temperature and for a time sufficient for eliminating the foam and unevenness of composition to be of no substantial problem, and is fabricated into a plate glass as shown in Fig. 1.

Glass 2 melted in a melting furnace 1 is supplied from a discharge nozzle 3, at a constant temperature in a range between 1100 to 1300°C and supplied to a lip 6 at a constant flow rate after regulated with a tweel 4 as glass melt 5.

The lip 6 comprises a gas component supplying unit 7, a support base 8 made of a porous material to be supplied the gas component from the unit 7, and a plurality of dynamic gravity control parts 9. The glass melt 5 is subject to spreading wide to the cross direction and thinning by means of the dynamic gravity control parts 9, and gradually forms a flat glass ribbon with uniform thickness.

The lip is inclined about 15° to 30° downward in the flow direction of the glass, and the slope is set according to the foregoing temperature and flow rate of glass. Also, the shape, size and disposition of the dynamic gravity control parts are designed and mounted in accordance with the foregoing factors.

Since the molten glass material supplied to the lip is floatingly supported by the gas generated from the lip, it will flow down without adhering to any parts of the lip surface, and the temperature and thickness of the glass ribbon 10 supplied from the lower end of the lip to the fabricating zone will substantially be uniform except the very slight portions at both side ends.

Subsequently, the glass ribbon 10 moves onto a gas generating support members 11 in the fabricating zone at a constant temperature in a temperature range between 1000 to 1100°C, and fabricated into a smooth and flat plate glass. The gas generating support members 11 comprises a gas component supplying unit 12, a gas generating support base 13 to be supplied the gas component therefrom, and a plurality of dynamic gravity control parts 14.

The glass ribbon 10 is extended wide evenly to the cross direction as in the case of the lip by means of the work of the dynamic gravity control parts 14. Simultaneously, the glass ribbon is subject to tensile stress along and across the ribbon flow exerted by a pinch roll 19 at downstream and a tensile stress application device 15 resulting in the thinning process and forming of flat plate glass 16 as the cooling of the glass proceeds.

After the fabrication, glass plate 16 is subsequently conveyed with rollers 18, 19 in the lehr 17 with care lest strain or warp should not be caused and subject to the slow-cooling.

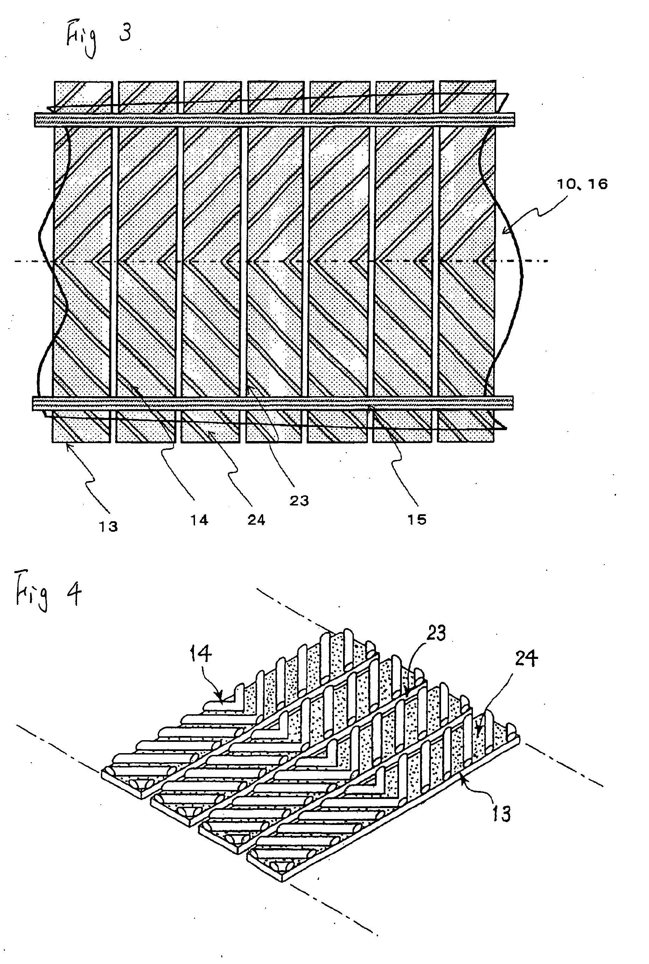

The enlarged figures of the members and devices used in the foregoing process are shown in Fig. 2, Fig. 3 and Fig. 4. Fig. 2 is a front view showing the flow of the glass melt on the lip and the subsequent width spreading, where the glass melt 5 supplied from the glass melt supply nozzle 3 is repeatedly subject to displacement and deformation as a result of the controlled gravity effect, which the dynamic gravity control parts 9 works on, leading to the extension of glass. ,

In other words, as a type of shallow trench is formed just in front of the dynamic gravity control parts 9, glass with low viscosity is subject to displacement in the cross direction due to the action of gravity in the shallow trench, and in addition, the gravity and surface tension will also work to have the glass approach a uniform thickness when it rides over the apex of a dynamic control part. As a consequence, the glass spreads laterally and evens up the thickness during these passages and, in the course of repeating the process, molten glass ribbon of broader width having a small thickness distribution forms.

Besides, as these series of procedures are conducted all the way with the glass supported by gas, the temperature distribution is difficult to come about, since the glass is primarily subject to the temperature decrease mainly caused by radiation.

As the degree of lateral spreading of the glass and averaging of thickness depends on the relation of the glass viscosity and retention time, etc., the favorable thickness, minimization of thickness distribution and temperature distribution can be achieved according to the adequate design of slope of the lip, the shape, size, setting angle, spacing, quantity, etc. of the dynamic gravity control parts. When needed, keeping the warmth is set to control the temperature decrease in a manner where it does not disturb the radiation cooling.

Further, side walls 22 comprising the gas generation members are also installed and it does not affect the prevailing radiation cooling when the glass comes in contact with it, while, with the existing platinum made lip, the flows along the both side walls suffer from the stagnation and temperature drop through the heat conduction by contact.

Further, grooves 20 and pores 21 for discharging gas are provided appropriately in order to let the gas escape away through to the rear of the support member.

Fig. 3 is a plan of the portion to show the fabrication of the glass ribbon supplied from the lip into a flat plate glass with uniform thickness, and Fig. 4 shows the disposition of the dynamic gravity parts.

The glass ribbon 10 is repeatedly subject to displacement and deformation through the work of the gravity by means of the dynamic gravity control parts 14 arranged on the support base 13, and the glass is extended to the cross direction associated with the move of the glass ribbon as the influence of gravity is simultaneously propagated in that direction with the dynamic gravity control parts 14. At the same time, the glass ribbon is subject to tensile stresses to the directions across and along the glass flow by means of the tensile stress application device 15 with pins or the like provided on the surface and the conveying rollers set downstream, etc. and whereby the thinning and flattening of the glass ribbon are performed.

Further, together with the gradual increase in viscosity and rigidity of the glass, the glass gets into the state where it may be supported only by the apex of the dynamic gravity control parts, will resultantly be in a state where it suffers little from the thermal stress, and the flattening is promoted based on the balance with the tensions.

As shown in Fig. 4, the gas generation support members are provided with grooves 23 and pores 24 for discharging the gas, and designed so that the pressure of gas generated from the support base 13 and the dynamic gravity control parts 14 should not be excessive.

The gas component in the present embodiment may be air, or water which easily gasifies by the heat of the glass.

In the case of air, the control of the amount and pressure of air necessary and sufficient to float the glass is important, and a gas component supply unit, support base and dynamic gravity control parts which are designed accordingly are used. When gas is water vapor, members composed of hydrophilic porous carbon or ceramics provided with the sufficient functions to spout water from the glass as vapor with the heat is used.

The embodiment explained above is merely a single example among a variety of embodiments of the present invention, and this invention shall not be limited to such embodiment. As other embodiments, for instance, the present invention can be used in a method of a mobile lip, of flowing the glass melt onto lip, etc. after accumulated temporarily in a reservoir on gutter, a case of moving the gas generation support members and glass in the same direction at different speeds, a case of moving only the gas generation support base, a case of mounting the dynamic gravity control parts at position of being shifted alternately in the lateral direction with the center slightly shifted from the middle of the support members, a case of running the gas generation support members and the dynamic gravity control parts opposite to the glass ribbon, a case of independently moving the gas generation support members and the dynamic gravity control parts, and so on.

Further, in some cases, this technology can also be effectively combined with other manufacturing methods of plate glass. For example, the invention includes the case, where, after fabricated to a given thickness by use of this technology, the pre-fabricated plate glass is further re-drawn under additional application of drawing stress to obtain thinner product.

Further, the range of application of the technology in terms of glass composition covers not only the soda lime silicate glass but also various glass compositions such as boro-silicate glass, so-called non-alkali glass to be used in displays, glass with improved acid resistance and brittle resistance, glass of various colors, partially crystallized glass and so on. In these cases, according to the physical, properties based on the glass composition, the conditions of the dynamic gravity control and applied tensile stress, as well as temperature, extent and speed of fabrication can be selected to settle within the scope of the fundamental requirements of this technology.

### INDUSTRIAL APPLICABILITY

As described above, the present invention is expected to have remarkable effect on the advanced industries such as the information related one, as it shows possibility to produce inexpensively and conveniently high quality plate glass having such surface of no defect nor stain, of superior nano-level smoothness and overall flatness, and of containing substantially no tin and the like. It also solves the complications of equipments and process management, and provides the effect of supplying inexpensively and conveniently high quality plate glass suitable for use in the display applications, and consequently is expected to show a remarkable effect in the advanced industries such as the IT one, etc.

In addition, the present invention may offer a general process using no precious resources such as tin and hydrogen, etc., requiring no extra-thermal-energy besides the heat of molten glass, comprising convenient and small scale apparatus accompanied with reduced equipment investment, emitting substantially no carbon dioxide nor other exhaust gasses, providing clean operational environment, and coping with easy and prompt change of grades, and a broad spectrum of productions covering from small-volume/multi-grades production to mass production.

## Claims

1. A manufacturing method to continuously fabricate plate glass which comprises supporting at least bottom surface of the traveling glass before stiffening by means of a gas generated from support members and controlling the gravitational effect on the glass to yield the partial displacement and deformation repeatedly while changing the position thereof so as to achieve propagation of overall glass extension.

2. The manufacturing method according to claim 1, wherein the support members are constructed from a plurality of gas generating support base and a plurality of gas generating parts which are placed on the said support base, leaving a space and arrayed perpendicular or at a given angle toward the traveling direction of the glass to induce gravitational effect on the glass providing the displacement and deformation.

3. The manufacturing method according to claim 2, wherein the height of the gas generating parts from support base is variable and adjustable.

4. The manufacturing method according to any of claims 1 to 3, wherein the support members are either fixed still, moving with different direction or moving with different speed in the same direction in regard to the glass traveling.

5. The manufacturing method according to any of claims 1 to 4, wherein tensile stress is applied to directions both along and across the direction of glass traveling in a temperature range where the glass viscosity is 10⁷ poise or less, or Young's modulus is 50GPa or less.

6. The manufacturing method according to any of claims 1 to 5, wherein process of flowing the glass melt onto the support members which are downward inclined with the direction of glass traveling.

7. The manufacturing method according to any of claims 1 to 6, wherein the support members are provided with grooves and/or pores to discharge the gas generated from the support members outside of the system.

8. The manufacturing method according to any of claims 1 to 7, wherein the support members comprise water immersed porous or fibrous material.

## Amended claims

### Amended claims under Art. 19.1 PCT

**1.** (Amended) A manufacturing method to continuously fabricate plate glass of a temperature that is greater than the glass transition point which comprises supporting at least bottom surface of the traveling glass by means of a gas generated from support members, raising a part of the glass with the gas generated from the support members, and utilizing the gravitational effect on the glass to yield the partial displacement and deformation from the center to both ends repeatedly while changing the position thereof so as to achieve propagation of overall glass extension.

**2.** (Amended) The manufacturing method according to claim 1, wherein the support members are constructed from a plurality of gas generating support bases and a plurality of gas generating parts for raising the glass which are placed on the said support bases, leaving a space and arrayed perpendicular or at a given angle toward the traveling direction of the glass to induce gravitational effect on the glass providing the displacement and deformation with said gas generating parts for raising the glass.

**3.** (Amended) The manufacturing method according to claim 2, wherein the height of the gas generating parts for raising the glass from support base is variable and adjustable.

**4.** The manufacturing method according to any of claims 1 to 3, wherein the support members are either fixed still, moving with different direction or moving with different speed in the same direction in regard to the glass traveling.

**5.** The manufacturing method according to any of claims 1 to 4, wherein tensile stress is applied to directions both along and across the direction of glass traveling in a temperature range where the glass viscosity is 10⁷ poise or less, or Young's modulus is 50GPa or less.

**6.** The manufacturing method according to any of claims 1 to 5, wherein process of flowing the glass melt onto the support members which are downward inclined with the direction of glass traveling.

**7.** The manufacturing method according to any of claims 1 to 6, wherein the support members are provided with grooves and/or pores to discharge the gas generated from the support members outside of the system.

**8.** The manufacturing method according to any of claims 1 to 7, wherein the support members comprise water immersed porous or fibrous material.

**9.** (Added) The manufacturing method according to any of claims 1 to 8, wherein the gas generating parts for raising the glass are convex parts in which the upper cross section thereof does not include an acute angle.

**10.** (Added) A manufacturing device to continuously fabricate plate glass of a temperature that is greater than the glass transition point which comprises supporting at least bottom surface of the traveling glass by means of a gas generated from support members, raising a part of the glass with the gas generated from the support members, and utilizing the gravitational effect on the glass to yield the partial displacement and deformation from the center to both ends repeatedly while changing the position thereof so as to achieve propagation of overall glass extension.

**11.** (Added) The manufacturing device according to claim 10, wherein the support members are constructed from a plurality of gas generating support bases and a plurality of gas generating parts for raising the glass which are placed on the said support bases, leaving a space and arrayed perpendicular or at a given angle toward the traveling direction of the glass to induce gravitational effect on the glass providing the displacement and deformation with said gas generating parts.

**12.** (Added) The manufacturing device according to claim 11, wherein the height of the gas generating parts for raising the glass from support base is variable and adjustable.

**13.** (Added) The manufacturing device according to any of claims 10 to 12, wherein the support members are either fixed still, moving with different direction or moving with different speed in the same direction in regard to the glass traveling.

**14.** (Added) The manufacturing device according to any of claims 10 to 13, wherein tensile stress is applied to directions both along and across the direction of glass traveling in a temperature range where the glass viscosity is 10⁷ poise or less, or Young's modulus is 50GPa or less.

**15.** (Added) The manufacturing device according to any of claims 10 to 14, wherein process of flowing the glass melt onto the support members which are downward inclined with the direction of glass traveling.

**16.** (Added) The manufacturing device according to any of claims 10 to 15, wherein the support members are provided with grooves and/or pores to discharge the gas generated from the support members outside of the system.

**17.** (Added) The manufacturing device according to any of claims 10 to 16, wherein the support members comprise water immersed porous or fibrous material.

**18.** (Added) The manufacturing device according to any of claims 10 to 17, wherein the gas generating parts for raising the glass are convex parts in which the upper cross section thereof does not include an acute angle.
